# EUROPÄISCHE PATENTSCHRIFT

(11) **EP 3 447 025 B1**
(45) Veröffentlichungstag und Bekanntmachung des Hinweises auf die Patenterteilung: **11.11.2020**
(21) Anmeldenummer: 18179346.4
(22) Anmeldetag: 22.06.2018
(51) Int. Cl.: C01B 3/38

(54) **VERFAHREN ZUR RÜCKGEWINNUNG VON INNERER ENERGIE AUS ABGASEN**
METHOD FOR THE RECOVERY OF INTERNAL ENERGY FROM EXHAUST GASES
PROCÉDÉ DE RÉCUPÉRATION DE L'ÉNERGIE INTERNE DES GAZ D'ÉCHAPPEMENT

(30) Priorität: 25.08.2017 DE 102017008088
(43) Veröffentlichungstag der Anmeldung: 27.02.2019
(73) Patentinhaber: Messer Group GmbH, 65812 Bad Soden (DE); Messer Austria GmbH, 2352 Gumpoldskirchen (AT)
(72) Erfinder: Demuth, Dr. Martin, 2353 Guntramsdorf (AT); Gaber, Christian Erich, 8010 Graz (AT); Hochenauer, Prof. Dr. Christoph, 8200 Eggersdorf bei Graz (AT); Spoljaric, Davor, 47839 Krefeld (DE)
(74) Vertreter: Münzel, Joachim R.

(56) Entgegenhaltungen:
- EP-A1- 3 336 430
- EP-A2- 0 953 543
- DE-A1-102016 123 591
- US-A1- 2009 011 290
- POPOV S K ET AL: "The use of thermochemical recuperation in an industrial plant", ENERGY, ELSEVIER, AMSTERDAM, NL, Bd. 127, 20. März 2017 (2017-03-20), Seiten 44-51, XP085025611, ISSN: 0360-5442, DOI: 10.1016/J.ENERGY.2017.03.091

## Beschreibung

Die Erfindung betrifft ein Verfahren zum Rückgewinnen von innerer Energie aus heißen Abgasen, bei dem in einem Ofen ein Kohlenmonoxid und Wasserstoff enthaltendes Synthesegas mit einem Sauerstoff enthaltendem Oxidationsmittel verbrannt und dabei ein heißes, Kohledioxid und Wasser enthaltendes Abgas erzeugt wird, das Abgas mit einem Wärmespeicher eines ersten Reaktors in thermischen Kontakt gebracht wird, wobei sich der Wärmespeicher des ersten Reaktors aufwärmt und sich das Abgas abkühlt, anschließend ein Teilstrom des Abgases rezirkuliert und zusammen mit einem Kohlenwasserstoff enthaltenden Brennstoff einem zweiten Reaktor zugeführt wird, in welchem ein durch thermischen Kontakt mit heißem Abgas aus dem Ofen erwärmter Wärmespeicher vorliegt, der Brennstoff und das rezirkulierte Abgas im zweiten Reaktor in einer endothermen Reaktion zu einem Kohlenmonoxid und Wasserstoff enthaltendem Synthesegas umgesetzt werden, wobei sich der Wärmespeicher des zweiten Reaktors abkühlt, und das Synthesegas aus dem zweiten Reaktor anschließend dem Ofen zugeführt wird, wobei dem zweiten Reaktor als Edukt zusätzlich und gleichzeitg zu dem Brennstoff und dem rezirkulierten Teilstrom des Abgases ein Sauerstoff enthaltendes Gas zugeführt wird.

Bei Verbrennungsprozessen in industriellen Ofenanlagen entstehen heiße Verbrennungsprodukte, die in der Regel als Rauch- oder Abgase abgeführt werden. Die in den Rauchgasen enthaltene innere Energie geht dabei in manchen Fällen ungenutzt verloren. Um wenigstens einen Teil der Wärmeenergie rückgewinnen zu können, sind bereits verschiedene Ansätze entwickelt worden.

Einer dieser Ansätze besteht darin, die dem Ofen zugeführten Brennstoffe und Oxidationsmittel durch Wärmetausch mit den aus dem Ofen abströmenden Rauchgasen vorzuwärmen. Die Wärme kann dabei insbesondere in Regeneratoren zurückgewonnen werden, die nacheinander vom heißen Rauchgas und anschließend vom Oxidationsmittel bzw. Brennstoff durchströmt werden. Das Rauchgas gibt dabei einen Teil seiner Wärme an einen Wärmespeicher im Regenerator ab, der diese zwischenspeichert und anschließend wiederum an das Oxidationsmittel bzw. dem Brennstoff abgibt. Üblicherweise kommen dabei zwei Regeneratoren zum Einsatz, die wechselweise betreiben werden, sodass stets ein Regenerator zum Aufnehmen der Wärme aus dem Rauchgas und ein zweiter Regenerator zum Aufheizen des Oxidationsmittels bzw. Brennstoffs zum Einsatz kommt.

Während dieses Verfahren häufig dann angewandt wird, wenn als Oxidationsmittel Luft zum Einsatz kommt, bringt es in Anlagen, in denen ein Brennstoff mit reinem Sauerstoff verbrannt wird (Oxyfuel-Anlagen) erhebliche technische Schwierigkeiten mit sich. Einerseits kann aufgrund der unterschiedlichen Wärmekapazitäten sowie der deutlich geringeren Volumenströme nur eine relativ geringe Wärmemenge aus dem Abgas zurückgewonnen werden und zum anderen wird das Material durch den erwärmten Sauerstoff sehr stark oxidierend belastet.

Beim sogenannten TCR-Verfahren (Thermo-Chemische Regeneration/Rekuperation), wie es beispielsweise in der EP 0 953 543 A1 beschrieben wird, wird dieses Problem umgangen, indem die Abgaswärme von mit Sauerstoff als Oxidationsmittel betriebenen Anlagen nicht zur Vorwärmung des Sauerstoffs, sondern teilweise zur internen Reformierung des Brennstoffs herangezogen wird.

Verfahren zum Rückgewinnen von innerer Energie aus heißen Abgasen sind auch aus US 2009 011290 A1 und

Popov et AI: "The use of thermochemical recuperation in an industrial plant", ENERGY, ELSEVIER, AMSTERDAM, NL, Bd. 127, 20-03-2017, Seiten 44-51, ISSN: 0360-5442, bekannt.

Für einen kontinuierlichen TCR-Betrieb ist ein Ofen üblicherweise mit mindestens zwei Reaktoren verbunden, die jeweils nacheinander als Reformer und als Regenerator arbeiten und nach festgelegten Zeitabständen ihre Betriebsweise derart wechseln, dass sich ein erster Reaktor immer in einer Regenerationsphase (Heizphase) und ein zweiter Reaktor in einer Reformierungsphase befindet. Die Regenerationsphase läuft dabei wie in herkömmlichen Regeneratoren ab, indem das heiße Abgas aus dem Ofen einen Teil der Wärme auf einen Wärmespeicher (Regenerationsbett) des ersten Reaktors überträgt. Das Abgas wird dabei abgekühlt und verlässt anschließend den Reaktor. Ein Teil des kalten Abgases wird in der Folge abgezweigt und mit einem kohlenwasserstoffhaltigen Brennstoff (z.B. CH₄) gemischt. Der nicht rezirkulierte Abgasanteil verlässt das System über eine entsprechende Abgasleitung. Das rezirkulierte Abgas und der Brennstoff werden als Gemisch oder in getrennten Zuleitungen dem zweiten Reaktor (Reformer) zugeführt, der im vorangegangenen Zyklus durch die heißen Abgase erwärmt wurde und in dem nun die Reformierungsphase eingeleitet wird. Dabei erfolgt eine chemische Umwandlung (Reformierung) des Brennstoffes zu Synthesegas. Für die Reformierung wird neben dem Brennstoff Wasserdampf und/oder Kohlendioxid benötigt. Bei der Verbrennung von Synthesegas mit Reinsauerstoff im Ofen besteht das Abgas zum Großteil aus diesen Komponenten und kann deshalb direkt für die Reformierung herangezogen werden. Bei der Reformierung von Methan läuft im Reformer im Wesentlichen die sogenannte Dampf- und Trockenreformierung ab. Deren Reaktionen sind sehr stark endotherm und benötigen hohe Temperaturen und geringe Drücke, um schnell genug ablaufen zu können:

| | | |
|---|---|---|
| (a) | CH₄ + H₂O ⇆ CO + 3H₂ | ΔH⁰_{R} = +206,3 MJ/kmol |
| (b) | CH₄ + CO₂ ⇆ 2CO + 2H₂ | ΔH⁰_{R} = +247,3 MJ/kmol |

Die Reaktionsgleichung der ablaufenden, auch als "Bi-Reformierung" bezeichneten chemischen Brutto-Reaktion lautet:

| | | |
|---|---|---|
| (c) | CH₄ + ¹/₃ CO₂ + ²/₃ H₂O ⇆ ⁴/₃ CO + ⁸/₃ H₂ | ΔH⁰_{R} = +220,0 MJ/kmol |

Die Zusammensetzung des reformierbaren Brennstoff-Abgas-Gemisches ermöglicht bei einer Abgasrezirkulation von 25% somit rein stöchiometrisch eine vollständige Umwandlung zu Synthesegas. Nur bei Öfen mit Abgastemperaturen von mindestens 1700°C reicht jedoch die im Abgas enthaltene Energie unter optimalen Bedingungen aus, um eine vollständige Umwandlung des Brennstoffs in Synthesegas sicherzustellen. Bei geringeren Abgastemperaturen wird nur ein Teil des Brennstoffs reformiert. Die zur Umsetzung benötigte Wärme ist im Bett des Reformers aufgrund der vorhergehenden Regenerationsphase gespeichert und wird an die Reaktanden abgegeben, wobei sich das Bett abkühlt.

Im teilreformierten Bereich fällt aber bei geringeren Reaktionstemperaturen aufgrund der entsprechenden chemischen Gleichgewichtszustände fester Kohlenstoff an, der sich im Bett des Reaktors anlagern und die Betriebsfähigkeit des Reaktors u.U. beeinträchtigen kann. Um derartige Kohleablagerungen zu vermeiden, wird in der EP 0 953 543 A1 vorgeschlagen, im Anschluss an die Reformierungsphase und noch vor der Regenerationsphase den für die Verbrennung des Synthesegases benötigten Sauerstoff zumindest teilweise durch den Reaktor zu leiten, um damit die Kohleablagerungen auszubrennen. Das Abbrennen des Kohlenstoffs führt jedoch zu einem zusätzlichen Verfahrensschritt und damit zu einer Verzögerung des Verfahrensablaufs. Zudem kommt es beim Durchleiten von hochreinem Sauerstoff aufgrund der Reaktion mit dem Kohlenstoff lokal zu unerwünscht hohen Temperaturen im Reaktor, denen dadurch begegnet werden muss, dass dem zugeführten Sauerstoff Abgas aus dem Verbrennungsprozess beigemischt wird, wodurch die Effizienz des Verfahrens sinkt.

Aufgabe der vorliegenden Erfindung ist daher, das beschriebene thermochemische Verfahren zur regenerativen Wärmerückgewinnung dahingehend zu verbessern, dass zuverlässig die Ausbildung von Kohleablagerungen im Reformer verhindert wird und/oder bereits gebildete Kohlenstoffablagerungen prozesssicher und mit wenig Aufwand entfernt werden können.

Gelöst ist diese Aufgabe durch ein Verfahren mit den Merkmalen des Patentanspruchs 1. Vorteilhafte Ausgestaltungen der Erfindung werden in den Unteransprüchen angegeben.

Erfindungsgemäß wird also bei einem Verfahren der eingangs genannten Art dem zweiten Reaktor (Reformer) als Edukt zusätzlich zu dem kohlenwasserstoffhaltigen Brennstoff und dem rezirkulierten Teilstrom des Ofenabgases ein Sauerstoff enthaltendes Gas zugeführt. Als "Sauerstoff enthaltendes Gas" wird hier ein Gasgemisch mit einem Anteil an gasförmigem Sauerstoff von über 0,1 Vol.-% verstanden. Insbesondere handelt es sich dabei beispielsweise um Luft, mit Sauerstoff angereicherte Luft oder reinen Sauerstoff (mit einem Sauerstoffanteil von 95 Vol.-% und mehr) oder auch um eine Gemisch aus Sauerstoff und Wasserdampf. Die direkte Zuführung des Sauerstoff enthaltenden Gases in den zweiten Reaktor erfolgt gleichzeitig mit den übrigen Edukten. Im Reformer führt eine durch den so zugeführten Sauerstoff eingeleitete partielle Oxidation dazu, dass die Bildung von Kohlenstoff zumindest reduziert wird. Dadurch erübrigt sich ein zusätzlicher Verfahrensschritt, in welchem im Reaktor entstandener Kohlenstoff mit einem sauerstoffreichen Gas abgebrannt wird, zumindest jedoch ist ein solcher Schritt zur Aufrechterhaltung der Funktionsfähigkeit des Reaktors weniger häufig erforderlich als bei Verfahren nach dem Stande der Technik.

Weiterhin reduziert die Zugabe des Sauerstoffs die für die endotherme Reformierungsreaktion benötigte Energie, sodass insgesamt eine höhere Temperatur im Bett des zweiten Reaktors erzielt wird als ohne Sauerstoffzugabe. Dadurch wird bei hinreichend hoher Verweilzeit der Edukte im Reaktor der Anteil von Wasserstoff und Kohlenmonoxid im Synthesegas erhöht.

Im Ofen findet eine Oxyfuel-Reaktion statt, d.h. das zugeführte Synthesegas, das überwiegend aus Wasserstoff und Kohlenmonoxid besteht, wird mit einem sauerstoffreichen Oxidationsmittel, bevorzugt Sauerstoff mit einer Reinheit von 95 Vol.-% und mehr verbrannt. Das hieraus resultierende Abgas besteht überwiegend aus Wasserdampf und Kohlendioxid, von dem wiederum ein Teilstrom in den zweiten Reaktor eingeleitet wird. Dort wird es zusammen mit dem Brennstoff, der parallel oder als Gemisch mit dem rezirkulierten Abgas zugeführt und zumindest überwiegend aus einem oder mehreren Kohlenwasserstoffen, wie beispielsweise Methan, besteht, zur Reaktion gebracht. Dabei entsteht das überwiegend aus Wasserstoff und Kohlenmonoxid bestehende Synthesegas, das anschließend dem Ofen zugeführt wird.

Bevorzugt beträgt der Sauerstoffanteil an den insgesamt dem zweiten Reaktor zugeführten Edukten zwischen 1 Vol.-% und 10 Vol.-%, besonders bevorzugt zwischen 2 Vol.-% und 7 Vol.-%. Die übrigen Edukte sind der dem zweiten Reaktor zugeführte Brennstoff sowie der rezirkulierte Teilstrom des Ofenabgases. Bei Sauerstoffanteilen darüber hinaus überwiegt die Verbrennung und der Synthesegas-Anteil an den Produkten wird nicht mehr erhöht.

Der dem zweiten Reaktor zugeführte Sauerstoff kann dabei teilweise durch eine stöchiometrisch entsprechende Menge an Wasserdampf ersetzt werden. In diesem Falle enthält das dem zweiten Reaktor zugeführte Oxidationsmittel neben Sauerstoff also Wasserdampf oder es besteht aus einer Mischung aus Sauerstoff und Wasserdampf. Durch ausschließliche Zugabe von Wasserdampf könnte die Bildung von Kohlenstoffablagerungen im Übrigen auch verringert werden; dies würde aber zu einer Verschiebung des chemischen Gleichgewichts führen, mit der Folge, dass der H₂O- Anteil im Synthesegas ansteigt. Insbesondere bei hohen Anteilen an rezirkuliertem Ofenabgas ist es daher zweckmäßiger, den Wasserdampfanteil gering zu halten oder reinen Sauerstoff zuzuführen.

Eine besonders vorteilhafte Ausgestaltung der Erfindung sieht vor, dass der rezirkulierte und dem zweiten Reaktor zugeführte Anteil des Abgases zwischen 20% und 40% beträgt. Ein besonders bevorzugter Anteil beträgt etwa 37,5%, um Kohlenstoffablagerungen wirksam zu vermeiden.

Durch Einbau eines Katalysators können stabilere Prozessbedingungen geschaffen und ein Start der endothermen chemischen Reaktion bei geringeren Temperaturen erreicht werden. Vorteilhaft ist beispielsweise ein Katalysator in Form einer Schüttung aus Nickel auf einem Träger aus Aluminiumoxid (Ni/Al₂O₃). Dies ermöglicht die Durchführung der endothermen chemischen Reaktion bei einer Temperatur zwischen 700°C und 900°C.

Üblicherweise werden die Reaktoren abwechselnd als Regeneratoren und als Reformer betreiben, wobei die Strömungswege der Reaktoren nach einer Zeitdauer von ca. 15 min bis 20 min geändert und der bis dahin als Regenerator betriebene Reaktor zum Reformer und der bis dahin als Reformer betriebene Reaktor zum Regenerator wird. Bei mehr als zwei Reaktoren sind Übergänge möglich, bei denen jeweils zwei oder mehr Reaktoren zumindest für eine gewisse Zeitdauer parallel als Reformer oder Regenerator betrieben werden. Um die Temperaturverhältnisse den jeweiligen Erfordernissen anpassen zu können, ist es möglich, den Regenerator und/oder den Reformer beispielsweise mittels einer elektrischen Heizeinrichtung zusätzlich zu beheizen.

Alternativ dazu sieht eine vorteilhafte Ausgestaltung der Erfindung vor, dass der erste Reaktor und der zweite Reaktor als Rekuperator betrieben werden. Dies ist insbesondere dann möglich, wenn die Kohlenstoffbildung chemisch zumindest weitgehend ausgeschlossen werden kann. Dies ist beispielsweise dann der Fall, wenn dem zweiten Reaktor Edukte derart zugeführt werden, dass dort folgende Reaktion ablaufen kann ("Tri-Reformierung"):

| |
|---|
| (d) CH₄ + 1/4 CO₂ + 1/2 H₂O + 1/8 O₂ ⇆ 5/4 CO + 5/2 H₂ |
| ΔH⁰_{R} = +156,2 MJ/kmol |

Der Anteil des rezirkulierten Abgases beträgt dabei 20% des gesamten im Ofen erzeugten Abgases. Bei einer Erhöhung der rezirkulierten Abgasmenge auf 37,5% fällt im zweiten Reaktor kein oder nahezu kein Kohlenstoff mehr an. Dadurch verschiebt sich allerdings auch das chemische Gleichgewicht und man erhält rein thermodynamisch kein vollständig aus Synthesegas bestehendes Reaktionsprodukt mehr.

Beim Betrieb der Reaktoren als funktionelle Einheiten eines Rekuperators sind der erste Reaktor und der zweite Reaktor über eine Kontaktfläche derart thermisch miteinander verbunden, dass die im ersten Reaktor vom Ofenabgas aufgenommene Wärme an den zweiten Reaktor abgegeben und dort zur Durchführung der endothermen Reaktionen eingesetzt wird. In diesem Falle sind der erste Reaktor und der zweite Reaktor bevorzugt in einem gemeinsamen Gehäuse angeordnet, und bei den Wärmespeichern des ersten Reaktors und des zweiten Reaktors handelt es sich um eine zwischen beiden Reaktoren angeordnete Wärmetauscherfläche. Beispielsweise handelt es sich bei dem Rekuperator um einen Rohrbündelwärmetauscher, bei dem das heiße Ofenabgas durch Röhren geführt wird, die sich durch einen mit den Edukten der Synthesegasreaktion beschickten Mantelraum erstrecken. Die Röhren nehmen an ihren Innenoberflächen innere Energie aus dem Ofenabgas auf und geben sie an ihren Außenoberflächen an den Mantelraum ab, in welchem die endotherme Reaktion stattfindet; das Röhreninnere fungiert also als Regenerator und der Mantelraum als Reformer. Im Übrigen kann auch bei dieser Ausgestaltung eine beispielsweise elektrische Heizeinrichtung vorgesehen sein, mittels der zumindest der als Reformer arbeitende Reaktor beheizt und somit die Wärmeübertragung aus dem Regenerator unterstützt werden kann.

Das erfindungsgemäße Verfahren ermöglicht es, den feuerungstechnischen Wirkungsgrad von als Oxy-Fuel-Anlagen betriebenen Öfen mit mittleren bis hohen Abgastemperaturen zwischen 700°C und 1700°C um bis zu 25% zu steigern. Das Verfahren ist insbesondere für Glasschmelzöfen oder sonstige für Hochtemperaturanwendungen eingesetzte Ofenanlagen geeignet.

Anhand der Zeichnung soll ein Ausführungsbeispiel der Erfindung näher erläutert werden. Die Zeichnung zeigt schematisch:
Fig. 1: Ein Diagramm der Betriebsweise einer Vorrichtung für die Durchführung des erfindungsgemäßen Verfahrens in einer ersten Ausführungsform
Fig. 2: Ein Diagramm der Betriebsweise einer Vorrichtung für die Durchführung des erfindungsgemäßen Verfahrens in einer zweiten Ausführungsform.

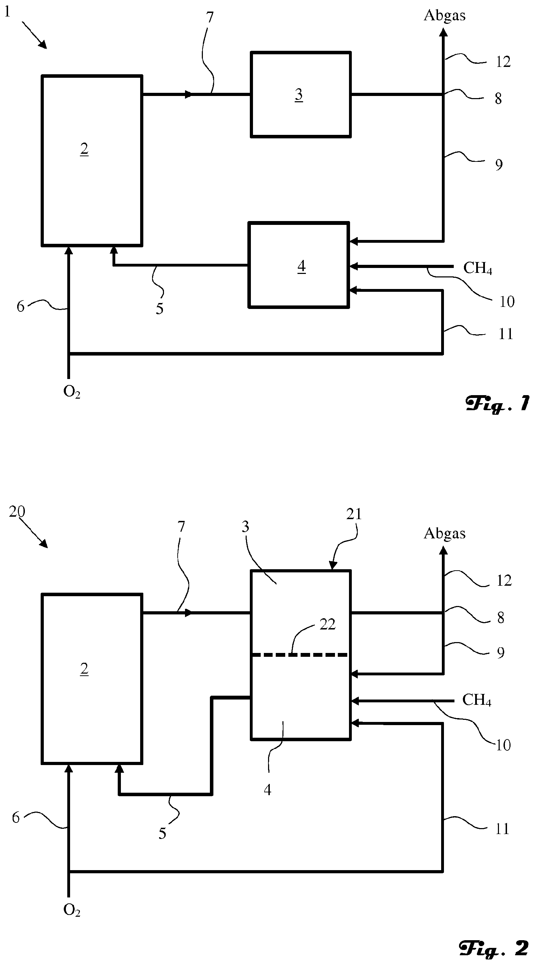

Die Vorrichtung 1 nach Fig. 1 umfasst einen Ofen 2 und zwei Reaktoren 3, 4, von denen ein erster Reaktor als Regenerator 3 und ein zweiter Reaktor als Reformer 4 betrieben wird. Die Reaktoren 3, 4 sind im Aufbau identisch und derart - in hier nicht gezeigter Weise - mit dem Ofen verschaltet, dass die Reaktoren 3, 4 wechselweise als Regenerator und als Reformer betrieben werden können.

Der Ofen 2, bei dem es sich beispielsweise um einen Glasschmelzofen handelt, weist eine Zuleitung 5 für Brennstoff und eine Zuleitung 6 für ein Oxidationsmittel, beispielsweise Sauerstoff, auf. Als Brennstoff kommt dabei ein Synthesegas zum Einsatz, das im Reformer 4 erzeugt wird. Als Oxidationsmittel kommt bevorzugt Sauerstoff (mit einer Reinheit von 95 Vol.-% oder mehr) zum Einsatz. Die bei der Verbrennung des Synthesegases mit dem Oxidationsmittel erzeugten Abgase werden über eine Abgasleitung 7 aus dem Ofen 2 abgeführt, die den Regenerator 3 durchläuft. An einer Verzweigungsstelle 8 zweigt von der Abgasleitung 7 eine Rückleitung 9 ab, die in den Reformer 4 einmündet. In den Reformer 4 mündet des Weiteren eine Zuleitung 10 für einen kohlenwasserstoffhaltigen Brennstoff, insbesondere für einen gasförmigen Brennstoff wie beispielsweise Methan oder Erdgas, sowie eine Zuleitung 11 für ein Sauerstoff enthaltendes Oxidationsmittel ein. Im Ausführungsbeispiel ist dazu die Zuleitung 11 mit der Zuleitung 6 verbunden und bezieht das Oxidationsmittel aus derselben, hier nicht gezeigten Quelle wie diese; es handelt sich bei dem Oxidationsmittel also um reinen Sauerstoff.

Im Betrieb der Vorrichtung 1 wird das dem Ofen 2 über die Zuleitung 5 zugeführte Synthesegas mit dem über Zuleitung 6 zugeführten Oxidationsmittel in einem Ofenraum des Ofens 2 verbrannt. Die dabei entstehenden, beispielsweise bei einer Temperatur von 700°C bis 900°C vorliegenden, Kohlendioxid und Wasser enthaltenden Abgase werden über die Abgasleitung 7 durch den Regenerator 3 geführt. Im Regenerator 3 befindet sich ein Wärmespeicher, der einen Teil der Wärme des Abgases aufnimmt und sich dabei erhitzt, während sich das Abgas abkühlt. Beim Wärmespeicher handelt es sich beispielsweise um eine thermische Speichermasse in Form einer Schüttung aus einem keramischen oder metallischen Material.

Ein großer Teil des im Regenerator abgekühlten Abgases wird über eine Ausleitung 12 abgeführt, während ein Teilstrom, beispielsweise zwischen 20% bis 40% des Abgases, über die Rückleitung 9 in den Reformer 4 eingeleitet wird. Im Reformer 4 findet eine endotherme Reaktion statt, in der der über Zuleitung 10 herangeführte kohlenwasserstoffhaltige Brennstoff mit dem über die Rückleitung 9 zugeführten Teil des Abgases zu einem Wasserstoff und Kohlenmonoxid enthaltendem Synthesegas reagiert. Die für die endotherme Reaktion benötigte Energie wird einem im Reformer 4 bei einer Temperatur von beispielsweise 600°C bis 850°C vorliegenden Wärmespeicher entnommen, der sich dabei abkühlt. Die hohe Temperatur hat der Wärmespeicher des Reformers 4 aus einer vorherigen Betriebsphase erhalten, in der der Reaktor 4 als Regenerator und der Reaktor 3 als Reformer fungierte. In dieser vorherigen Betriebsphase erfolgte ein thermischer Kontakt des Wärmespeichers des Reaktors 4 mit den Abgasen aus dem Ofen 2, aufgrund dessen der Wärmespeicher des Reaktors 4 auf eine Temperatur von z.B. 850°C oder darüber aufgeheizt wurde.

Um die Effizienz der im Reformer 4 ablaufenden Reaktion zu erhöhen, sind die Reaktoren 3, 4 mit einem Katalysator ausgerüstet, bei dem es sich beispielsweise um Nickel handelt, das auf einem inerten, in Form von Schüttgut vorliegendem Trägermaterial aufgebracht ist. Nach einer Zeitdauer von ca. 15 min bis 20 min ist das Speichermedium im Reformer 4 so weit abgekühlt, dass eine Umschaltung der Reaktoren erforderlich ist, d.h. der bisherige Reformer 4 wird zum neuen Regenerator und der bisherige Regenerator 3 wird zum Reformer.

Durch die direkte Zuführung von Sauerstoff über die Zuleitung 11 wird die Effizienz der Vorrichtung 1 weiter erhöht. Die Zuführung von Sauerstoff leitet eine partielle Oxidation im zweiten Reaktor ein, durch die insbesondere die Bildung von Kohleablagerungen auf den Wärmespeichern der Reaktoren 3, 4 unterdrückt wird.

Die direkte Zuführung von Sauerstoff in den Reformer 4 ermöglicht es auch, auf eine Umschaltung der Reaktoren 3, 4 und deren abwechselnden Einsatz als Reformer bzw. Regenerator zu verzichten und Regeneration und Reformierung in einer einzigen, kontinuierlich betreibbaren Apparatur (Rekuperator) vorzunehmen. Eine solche Anordnung ist in Fig. 2 gezeigt, bei der im Übrigen gleich wirkende Merkmale mit den gleichen Bezugszeichen wie in Fig. 1 bezeichnet sind.

Bei der Vorrichtung 20 sind Regenerator 3 und Reformer 4 in einer Apparatur zusammengefasst, die im Folgenden als Rekuperator 21 bezeichnet wird. Die Reaktoren 3, 4 stellen hier also funktionelle Einheiten des Rekuperators 21 dar. Der Rekuperator 21 weist eine thermische Kontaktfläche 22 zwischen Regenerator 3 und Reformer 4 auf, die einen indirekten Wärmeübergang von den durch die Abgasleitung 7 geführten heißen Abgase auf die im Reformer 4 erfolgende endotherme Reaktion erlaubt. Beispielsweise handelt es sich beim Rekuperator um einen Röhrenwärmetauscher, bei dem das Abgas durch eine oder mehrere Röhren geführt wird, die innerhalb eines Mantelraums angeordnet sind, in dem die Reaktionsgase der endothermen Reaktion vorliegen. Die Wärme wird in diesem Fall auf die Wände der Röhre oder der Röhren übertragen, die insoweit als Wärmespeicher fungieren, die Wärme jedoch sogleich über ihre Außenflächen an die Reaktionspartner der endothermen Reaktion abgeben. Die direkte Zuführung von Sauerstoff in den Reformer 4 führt zu einer partiellen Oxidation, die mit der dort ablaufenden Synthesegas-Reaktion insgesamt zu einer "Tri-Reformierung" gemäß obiger Gleichung (d) führt. Der Anteil des rezirkulierten Abgases beträgt dabei etwa 37,5%. Auf diese Weise wird die Entstehung von Kohleablagerungen im Reformer 4 des Rekuperators 21 wirkungsvoll unterdrückt und damit ein kontinuierlicher Betrieb des Rekuperators 21 ermöglicht.

### Bezugszeichenliste

- 1.: Vorrichtung
- 2.: Ofen
- 3.: Reaktor
- 4.: Reaktor
- 5.: Zuleitung für Brennstoff
- 6.: Zuleitung für Oxidationsmittel
- 7.: Abgasleitung
- 8.: Verzweigungsstelle
- 9.: Rückleitung
- 10.: Zuleitung für Brennstoff
- 11.: Zuleitung für Oxidationsmittel
- 12.: Ausleitung
- 13.: -
- 14.: -
- 15.: -
- 16.: -
- 17.: -
- 18.: -
- 19.: -
- 20.: Vorrichtung
- 21.: Rekuperator
- 22.: Thermische Kontaktfläche

## Patentansprüche

1. Verfahren zum Rückgewinnen von innerer Energie aus heißen Abgasen, bei dem in einem Ofen (2) ein Kohlenmonoxid und Wasserstoff enthaltendes Synthesegas mit einem Sauerstoff enthaltendem Oxidationsmittel verbrannt und dabei ein heißes, Kohledioxid und Wasser enthaltendes Abgas erzeugt wird, das Abgas mit einem Wärmespeicher eines ersten Reaktors (3) in thermischen Kontakt gebracht wird, wobei sich der Wärmespeicher des ersten Reaktors (3) aufwärmt und sich das Abgas abkühlt, anschließend ein Teilstrom des Abgases rezirkuliert und zusammen mit einem Kohlenwasserstoff enthaltenden Brennstoff einem zweiten Reaktor (4) zugeführt wird, in welchem ein durch thermischen Kontakt mit heißem Abgas aus dem Ofen (2) erwärmter Wärmespeicher vorliegt, der Brennstoff und das rezirkulierte Abgas im zweiten Reaktor (4) in einer endothermen Reaktion zu einem Kohlenmonoxid und Wasserstoff enthaltendem Synthesegas umgesetzt werden, wobei sich der Wärmespeicher des zweiten Reaktors (4) abkühlt, und das Synthesegas aus dem zweiten Reaktor (4) anschließend dem Ofen (2) zugeführt wird,
**dadurch gekennzeichnet,**
**dass** dem zweiten Reaktor (4) als Edukt zusätzlich und gleichzeitig zu dem Brennstoff und dem rezirkulierten Teilstrom des Abgases ein Sauerstoff enthaltendes Gas zugeführt wird.

2. Verfahren nach Anspruch 1, **dadurch gekennzeichnet, dass** der Sauerstoffanteil an den dem zweiten Reaktor (4) zugeführten Edukten zwischen 1 Vol.-% und 10 Vol.-%, bevorzugt zwischen 2 Vol.-% und 7 Vol.-%, beträgt.

3. Verfahren nach Anspruch 1 oder 2, **dadurch gekennzeichnet, dass** das dem zweiten Reaktor (4) zugeführte Oxidationsmittel neben Sauerstoff Wasserdampf enthält.

4. Verfahren nach einem der vorhergehenden Ansprüche, **dadurch gekennzeichnet, dass** der rezirkulierte und dem zweiten Reaktor (4) zugeführte Teilstrom des Abgases einen Anteil von zwischen 20% und 40%, bevorzugt etwa 37,5% des Ofenabgases umfasst.

5. Verfahren nach einem der vorhergehenden Ansprüche, dass im ersten Reaktor (3) und/oder dem zweiten Reaktor (4) ein Katalysator vorgesehen ist.

6. Verfahren nach einem der vorhergehenden Ansprüche, **dadurch gekennzeichnet, dass** die Reaktionstemperatur im zweiten Reaktor (4) zwischen 700°C und 900°C beträgt.

7. Verfahren nach einem der vorhergehenden Ansprüche, **dadurch gekennzeichnet, dass** der erste Reaktor (3) und der zweite Reaktor (4) im Wechsel als Regenerator und als Reformer betreiben werden.

8. Verfahren nach einem der vorhergehenden Ansprüche, **dadurch gekennzeichnet, dass** zwischen dem ersten Reaktor (3) und dem zweiten Reaktor (4) eine thermische Kontaktfläche (22) besteht und die Reaktoren (3, 4) als Rekuperator (21) betreiben werden.

## Claims

1. Method for recovering internal energy from hot exhaust gases, in which a synthesis gas containing carbon monoxide and hydrogen is burnt by means of an oxygen-containing oxidant in a furnace (2) and a hot exhaust gas containing carbon dioxide and water is thereby produced, the exhaust gas is brought into thermal contact with a heat store of a first reactor (3), with the heat store of the first reactor (3) heating up and the exhaust gas being cooled, a substream of the exhaust gas is subsequently recirculated and fed together with a hydrocarbon-containing fuel to a second reactor (4) in which a heat store which has been heated by thermal contact with hot exhaust gas from the furnace (2) is present, the fuel and the recirculated exhaust gas are reacted in the second reactor (4) in an endothermic reaction to give a synthesis gas containing carbon monoxide and hydrogen, with the heat store of the second reactor (4) being cooled and the synthesis gas from the second reactor (4) subsequently being fed to the furnace (2), **characterized in that** an oxygen-containing gas is fed as starting material to the second reactor (4) in addition to and simultaneously with the fuel and the recirculated substream of the exhaust gas.

2. Method according to Claim 1, **characterized in that** the proportion of oxygen in the starting materials fed to the second reactor (4) is in the range from 1% by volume to 10% by volume, preferably from 2% by volume to 7% by volume.

3. Method according to Claim 1 or 2, **characterized in that** the oxidant fed to the second reactor (4) contains water vapour in addition to oxygen.

4. Method according to any of the preceding claims, **characterized in that** the recirculated substream of the exhaust gas which is fed to the second reactor (4) comprises a proportion of from 20% to 40%, preferably about 37.5%, of the furnace exhaust gas.

5. Method according to any of the preceding claims, **characterized in that** a catalyst is provided in the first reactor (3) and/or the second reactor (4).

6. Method according to any of the preceding claims, **characterized in that** the reaction temperature in the second reactor (4) is in the range from 700°C to 900°C.

7. Method according to any of the preceding claims, **characterized in that** the first reactor (3) and the second reactor (4) are alternately operated as regenerator and as reformer.

8. Method according to any of the preceding claims, **characterized in that** there is a thermal contact area (22) between the first reactor (3) and the second reactor (4) and the reactors (3, 4) are operated as recuperator (21) .

## Revendications

1. Procédé de récupération d'énergie interne à partir de fumées chaudes, avec lequel un gaz de synthèse contenant du monoxyde de carbone et de l'hydrogène est brûlé dans un four (2) avec un oxydant contenant de l'oxygène et des fumées chaudes contenant du dioxyde de carbone et de l'eau étant ainsi produites, les fumées sont mises en contact thermique avec un accumulateur de chaleur d'un premier réacteur (3), l'accumulateur de chaleur du premier réacteur (3) se réchauffant et les fumées se refroidissant, un courant partiel des fumées étant ensuite remis en circulation et acheminé, conjointement avec un combustible qui contient un hydrocarbure, à un deuxième réacteur (4) dans lequel se trouve un accumulateur de chaleur réchauffé par contact thermique avec les fumées chaudes issues du four (2), le combustible et les fumées remises en circulation sont transformés dans le deuxième réacteur (4), dans une réaction endotherme, en un gaz de synthèse contenant du monoxyde de carbone et de l'hydrogène, l'accumulateur de chaleur du deuxième réacteur (4) se refroidissant et le gaz de synthèse issu du deuxième réacteur (4) étant ensuite acheminé au four (2),
**caractérisé en ce que**
un gaz contenant de l'oxygène est acheminé au deuxième réacteur (4) en tant que produit de départ en complément et simultanément au combustible et au courant partiel des fumées remis en circulation.

2. Procédé selon la revendication 1, **caractérisé en ce que** la part d'oxygène dans les produits de départ acheminés au deuxième réacteur (4) est comprise entre 1 % volumique et 10 % volumiques, de préférence entre 2 % volumiques et 7 % volumiques.

3. Procédé selon la revendication 1 ou 2, **caractérisé en ce que** l'oxydant acheminé au deuxième réacteur (4) contient de la vapeur d'eau en plus de l'oxygène.

4. Procédé selon l'une des revendications précédentes, **caractérisé en ce que** le courant partiel des fumées remis en circulation et acheminé au deuxième réacteur (4) comprend une part comprise entre 20 % et 40 %, de préférence d'environ 37,5 % des fumées de four.

5. Procédé selon l'une des revendications précédentes, **caractérisé en ce qu'**un catalyseur est présent dans le premier réacteur (3) et/ou le deuxième réacteur (4).

6. Procédé selon l'une des revendications précédentes, **caractérisé en ce que** la température de réaction dans le deuxième réacteur (4) est comprise entre 700 °C et 900 °C.

7. Procédé selon l'une des revendications précédentes, **caractérisé en ce que** le premier réacteur (3) et le deuxième réacteur (4) fonctionnent en alternance en tant que régénérateur et en tant que reformeur.

8. Procédé selon l'une des revendications précédentes, **caractérisé en ce qu'**il existe une surface de contact thermique (22) entre le premier réacteur (3) et le deuxième réacteur (4) et les réacteurs (3, 4) fonctionnent en tant que récupérateur (21).
